# EUROPÄISCHE PATENTSCHRIFT

(11) **EP 1 245 330 B1**
(45) Veröffentlichungstag und Bekanntmachung des Hinweises auf die Patenterteilung: **29.03.2006**
(21) Anmeldenummer: 02405189.8
(22) Anmeldetag: 12.03.2002
(51) Int. Cl.: B23Q 11/00

(54) **Staubabsaugung für ein Handwerkzeuggerät**
Collection of dust by suction in a hand tool
Collection par aspiration de poussière pour un outil à main motorisé

(30) Priorität: 27.03.2001 DE 10115116
(43) Veröffentlichungstag der Anmeldung: 02.10.2002
(73) Patentinhaber: HILTI Aktiengesellschaft, 9494 Schaan (LI)
(72) Erfinder: Ege, Manfred, 82386 Huglfing (DE); Fünfer, Josef, 86343 Königsbrunn (DE); Moser, Josef, 5452 Oberrohrdorf (CH)
(74) Vertreter: Wildi, Roland

(56) Entgegenhaltungen:
- EP-A- 0 426 321
- EP-A- 0 434 295
- DE-A- 2 546 531
- DE-A- 2 548 100
- FR-A- 2 702 171
- GB-A- 2 294 538
- US-A- 4 207 953
- PATENT ABSTRACTS OF JAPAN vol. 004, no. 143 (M-035), 8. Oktober 1980 (1980-10-08) & JP 55 096208 A (OOI TAKUTO), 22. Juli 1980 (1980-07-22)

## Beschreibung

Die Erfindung bezeichnet eine Staubabsaugung für ein zumindest teilweise drehendes Handwerkzeuggerät wie eine Bohrmaschine oder einen Bohrhammer. Eine solche Staubabsaugung gemäß dem Oberbegriff des unabhängigen Anspruchs 1 ist aus dem Dokument EP 0 434 295 A bekannt.

Der bei Bohr- und Meisselarbeiten anfallende Staub ist für den Nutzer ungesund, verursacht Nacharbeiten und erhöht den Verschleiss von Handwerkzeuggeräten.

EP 0 434 295 zeigt eine Staubabsaugung gemäß dem Oberbegriff des Anspruchs 1, die gleichzeitig einen einstellbaren Tiefenanschlag ausbildet und an einem Zusatzhandgriff gehalten ist. Ein starrer Teil einer Saugleitung, der als wesentlicher Teil des Tiefenanschlages dient, ist am Zusatzhandgriff verschiebbar gehalten. Der starre Teil der Saugleitung und ein im Zusatzhandgriff angeordnetes Gebläse sind über einen flexiblen Teil der Saugleitung verbunden, der sich bei der Verschiebung des starren Teils verformt.

JP 55 096 208 A zeigt ein Bohrgerät, auf dessen Motor-Getriebe-Gehäuse ein Saugzylinder verschiebbar gehalten ist. Zwischen dem Saugzylinder und dem Gehäuse wirkt ein Faltenbalg, der eine Werkzeugspindel umgibt und über den abgetragenes Material von einem Arbeitsbereich über das Motor-Getriebe-Gehäuse in eine Auffangkammer transportiert wird, die in einen Gerätegriff integriert ist.

GB 2 294 538 beschreibt einen handgehaltenen Staubsauger, durch dessen Saugkopf ein Bohrwerkzeug hindurch bewegt werden kann. Um dabei im Innenraum des Saugkopfes eine ausreichende Saugwirkung erzielen zu können, ist die Rückseite des Saugkopfes durch radial nach innen orientierte Borsten nach aussen hin abgedichtet.

Die Staubabsaugung nach der EP470046B1 ist als eine, mit dem antreibenden Handwerkzeuggerät kombinierbare, Einheit ausgeführt, wobei ein Saugrad der Staubabsaugung drehfest mit einer antreibenden Welle des Handwerkzeuggerätes verbindbar ist.

Nach der DE4335417A1 ist der, ein gefaltetes Filterelement beinhaltende, Staubbehälter einer mit dem antreibenden Handwerkzeuggerät kombinierbaren Staubabsaugung drehschwenkbar in die Staubabsaugung einsetzbar und dichtend verriegelbar, wozu ein Gehäuseteil der Staubabsaugung über ein Scharnier aufklappbar ist.

Nach der DE2548100A1 ist das teleskopartig ausgeführte Saugrohr der Staubabsaugung parallel zur Werkzeugachse geführt und aussen von einem federunterstützten Faltenbalg umgeben. Endseitig ist am Saugrohr ein, vom Werkzeug durchdringbarer, hohlringförmiger Saugkopf angeordnet. Nachteilig ist der von aussen freiliegende empfindliche Faltenbalg insbesondere im rauhen Umfeld des Baugewerbes.

Nach der US5993122 weist eine federnd vorgespannte Befestigung für einen endseitigen Saugkopf eine einstellbare Längenbegrenzung auf. Der Saugschlauch ist zusätzlich mit dem Saugkopf verbunden und somit hinderlich.

Nach der US4207953 ist ein Tiefenanschlag mit endseitigern hohlringförmigen Saugkopf als parallel zur Werkzeugachse angeordnetes Saugrohr ausgeführt, welches innen eine Spiralfeder beinhaltet. Nachteilig ist der direkt mit dem Handwerkzeuggerät verbundene hinderliche Saugschlauch, welcher den Staub zudem durch das Handwerkzeuggerät führt.

Die Aufgabe der Erfindung besteht in der Realisierung einer robusten, als Tiefenanschlag ausgebildeten Staubabsaugung. Ein weiterer Aspekt besteht in der einfachen Befestigung des Staubbehälters in der Staubabsaugung und dieser am Handwerkzeuggerät.

Die Aufgabe wird durch die Merkmale des unabhängigen Anspruchs gelöst. Vorteilhafte Weiterbildungen ergeben sich aus den Unteransprüchen.

Im wesentlichen weist die Staubabsaugung für ein damit kombinierbares, zumindest teilweise drehendes, Handwerkzeuggerät ein parallel zur Werkzeugachse geführtes, radial versetztes, mit dem endseitigen Saugkopf verbundenes, drehfestes, teleskopartig axial begrenzt bewegliches Saugrohr mit einem einstellbaren axialen Tiefenanschlag auf, wobei das Saugrohr koaxial innen einen Faltenbalg beinhaltet.

Durch den innenliegenden Faltenbalg wird eine Beschädigung dessen im rauhen Umfeld des Baugewerbes vermieden.

Vorteilhaft ist das Saugrohr in sich axial federnd vorgespannt, wodurch der am Saugrohr endseitig angeordnete Saugkopf, selbsttätig gegen eine Bearbeitungsfläche drückend, saugdichtend anliegt.

Vorteilhaft ist der Faltenbalg federunterstützt, wodurch die Feder sowohl die axiale Vorspannung als auch die radiale Öffnung bewirkt.

Vorteilhaft ist der Saugkopf mit radial nach innen orientierten Borsten versehen, wodurch ein koaxial durchgehendes Werkzeug saugdicht aufnehmbar ist.

Vorteilhaft weist das teleskopartig axial begrenzt bewegliche Innenteil des Saugrohres aussen einen im wesentlichen kreisrunden Querschnitt und eine axiale Verzahnung auf, in welcher ein koaxial aussen angeordneter Tiefenanschlag zumindest diskret axial versetzbar und drehrastbar ist.

Vorteilhaft ist zwischen dem Innenteil und dem Aussenteil des Saugrohres ein axial begrenzt beweglicher und zum Innenteil zumindest diskret axial versetzbarer, in die axiale Verzahnung drehrastbarer Stellriegel angeordnet, welcher in einer axial verlaufenden, im Aussenteil radial innen angeordneten, axial verlaufenden Nut geführt, eine drehfeste Führung des endseitig angeordneten Saugkopfes ermöglicht.

Vorteilhaft ist auf dem Aussenteil am axialen Übergang zum Innenteil des Saugrohres ein axial fester, begrenzt umfänglich versetzbarer Stellring angeordnet, welcher den drehrastbaren Stellriegel umfänglich beidseitig formschlüssig umgreifbar ausgebildet ist. Eine Verdrehung des Stellrings ermöglicht in Verbindung mit einer axialen Positionierung des Innenteils eine rastbare Versetzung des Stellriegels und damit eine Längenbegrenzung des selbsttätig axial expandierenden Saugrohres.

Andererseits weist im wesentlichen die als eine, mit dem antreibenden Handwerkzeuggerät kombinierbare, Einheit ausgeführte Staubabsaugung mit einem drehfest mit einer Welle des Handwerkzeuggerätes verbindbaren Saugrades einen drehbar gelagerten Entarretierhebel auf, welcher entgegen der Werkzeugrichtung betätigt in das Handwerkzeuggerät eingreifende Arretierungsmittel freigibt.

Diese Befestigung ermöglicht eine einfache Montage der Staubabsaugung unterhalb des Handwerkzeuggerätes durch einfaches Einrasten und eine einfache Demontage über eine, bei zweckentsprechender Verwendung des Handwerkzeuggerätes nicht vorkommende, Bewegungsrichtung des Entarretierhebels entgegen der Werkzeugrichtung.

Vorteilhaft sind zwei, über den Entarretierhebel lösbare, federnd vorgespannte Arretierungsmittel beidseitig zur Symmetrieebene des Handwerkzeuggerätes versetzt angeordnet, wodurch im Zusammenwirken mit der Führung des Saugrades auf der antreibenden Welle des Handwerkzeuggerätes eine Festlegung an mindestens drei, nicht auf einer Gerade liegenden Punkten und somit eine unbewegliche Befestigung erfolgt.

Vorteilhaft ist der Entarretierhebel auf der Unterseite der Staubabsaugung angeordnet, an welcher bei zweckentsprechender Verwendung des Handwerkzeuggerätes keine Handhabung erfolgt.

Vorteilhaft ist dem Entarretierhebel ein nach unten entfernbarer Staubbehälter, vorzugsweise mit integriertem Faltenfilter, benachbart zugeordnet, wodurch eine kompakte Bauweise ermöglicht wird.

Vorteilhaft ist der Staubbehälter über eine drehbar federnd vorgespannt gelagerte, weiter vorteilhaft von unten entgegen der Werkzeugrichtung betätigbare, Entarretierung selbst einrastend und einfach entarretierbar.

Die Erfindung wird bezüglich eines vorteilhaften Ausführungsbeispiels näher erläutert mit einer bildlichen Darstellung einer Staubabsaugung

Nach der Darstellung weist eine Staubabsaugung 1 für ein damit kombinierbares, zumindest teilweise um eine Werkzeugachse A drehendes, Handwerkzeuggerät 2 ein längs einer Führungsachse B parallel zur Werkzeugachse A geführtes, radial versetztes, mit einem endseitigen Saugkopf 3 verbundenes, drehfestes, teleskopartig axial begrenzt bewegliches Saugrohr 4 mit einem einstellbaren axialen Tiefenanschlag 5 auf, wobei das Saugrohr 4 koaxial innen einen Faltenbalg 6 beinhaltet, welcher durch eine innenliegende Feder 7 radial geöffnet wird und axial gegen eine Bearbeitungsfläche 8 drückt und an dieser saugdichtend anliegt. Der Saugkopf 3 ist mit radial nach innen orientierten Borsten 9 versehen, welche ein angedeutetes koaxial durchgehendes Werkzeug 10 saugdicht aufnehmen. Ein teleskopartig axial begrenzt bewegliches Innenteil 11 des Saugrohres 4 weist aussen einen im wesentlichen kreisrunden Querschnitt und eine axiale Verzahnung 12 auf, in welcher der koaxial aussen angeordnete Tiefenanschlag 5 diskret axial versetzbar und drehrastbar ist. Zwischen dem Innenteil 11 und einem Aussenteil 13 des Saugrohres ist ein axial begrenzt beweglicher und zum Innenteil 11 diskret axial versetzbarer, in die axiale Verzahnung 12 drehrastbarer Stellriegel 14 angeordnet, welcher in einer axial verlaufenden, im Aussenteil 13 radial innen angeordneten, axial verlaufenden Nut 15 geführt wird. Auf dem Aussenteil 13 am axialen Übergang zum Innenteil 11 des Saugrohres 4 ist ein axial fester, begrenzt umfänglich versetzbarer Stellring 16 angeordnet, welcher den innenseitig drehrastbaren Stellriegel 14 umfänglich beidseitig formschlüssig umgreifen und drehrasten kann, wenn dieser axial zugeordnet ist. Die Staubabsaugung 1 weist ein drehfest mit einer Welle M des Handwerkzeuggerätes 2 verbundenes Saugrad 17 und auf der Unterseite einen drehbar gelagerten Entarretierhebel 18 auf, welcher entgegen der Werkzeugrichtung betätigt zwei in das Handwerkzeuggerät 2 eingreifende, federnd vorgespannte Arretierungsmittel 19, 19' freigeben, wobei nur einer bildlich dargestellt ist. Dem Entarretierhebel 18 ist ein nach unten entfernbarer Staubbehälter 20 mit integriertem Faltenfilter 21 benachbart zugeordnet. Der Staubbehälter ist über eine drehbar federnd vorgespannt gelagerte, von unten entgegen der Werkzeugrichtung betätigbare, Entarretierung 22 selbst einrastend und einfach entarretierbar.

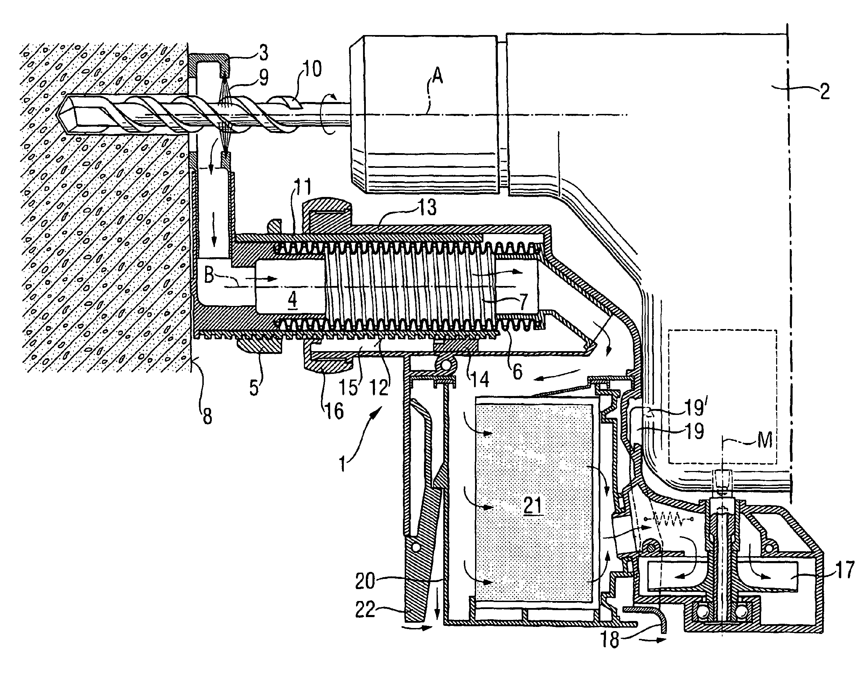

## Patentansprüche

1. Staubabsaugung für ein zumindest teilweise drehendes Handwerkzeuggerät (2) mit einem parallel zur Werkzeugachse (A) geführten, radial versetzten, mit einem endseitigen Saugkopf (3) verbundenen, drehfesten, teleskopartig axial begrenzt beweglichen Saugrohr (4) mit einem einstellbaren axialen Tiefenanschlag (5), **dadurch gekennzeichnet, dass** das Saugrohr (4) koaxial innen einen Faltenbalg (6) beinhaltet.

2. Staubabsaugung nach Anspruch 1, **dadurch gekennzeichnet, dass** das Saugrohr (4) in sich axial federnd vorgespannt ausgebildet ist.

3. Staubabsaugung nach Anspruch 1 oder Anspruch 2, **dadurch gekennzeichnet, dass** der Faltenbalg (6) federunterstützt ist.

4. Staubabsaugung nach einem der vorherigen Ansprüche, **dadurch gekennzeichnet, dass** der Saugkopf (3) mit radial nach innen orientierten Borsten (9) versehen ist.

5. Staubabsaugung nach einem der vorherigen Ansprüche, **dadurch gekennzeichnet, dass** das teleskopartig axial begrenzt bewegliche Innenteil (11) des Saugrohres (4) aussen einen im wesentlichen kreisrunden Querschnitt und eine axiale Verzahnung (12) aufweist, in welcher der koaxial aussen angeordnete Tiefenanschlag (5) zumindest diskret axial versetzbar und drehrastbar ist.

6. Staubabsaugung nach einem der vorherigen Ansprüche, **dadurch gekennzeichnet, dass** zwischen dem Innenteil (11) und dem Aussenteil (13) des Saugrohres (4) ein axial begrenzt beweglicher und zum Innenteil (11) zumindest diskret axial versetzbarer, in die axiale Verzahnung (12) drehrastbarer Stellriegel (14) angeordnet ist.

7. Staubabsaugung nach Anspruch 6, **dadurch gekennzeichnet, dass** auf dem Aussenteil (13) am axialen Übergang zum Innenteil (11) des Saugrohres (4) ein axial fester, begrenzt umfänglich versetzbarer Stellring (16) angeordnet ist, welcher den drehrastbaren Stellriegel (14) umfänglich beidseitig formschlüssig umgreifbar ausgebildet ist.

## Claims

1. Dust extractor for an at least partially rotating hand tool device (2), with a suction tube (4) guided parallel to the tool axis (A), radially offset, fast against rotation, telescopically movable axially to a limited extent, connected at an end with a suction head (3), with an adjustable axial depth limit stop (5), **characterised in that** the suction tube (4), inside, includes a coaxial expansion bellows (6).

2. Dust extractor according to claim 1, **characterised in that** the suction tube (4) is constructed, within, axially resiliently preloaded.

3. Dust extractor according to claim 1 or claim 2, **characterised in that** the expansion bellows (6) is supported by spring means.

4. Dust extractor according to one of the preceding claims, **characterised in that** the suction head (3) is provided with bristles (9) oriented radially inwards.

5. Dust extractor according to one of the preceding claims, **characterised in that** the inner component (11) which is telescopically movable axially to a limited extent, namely the inner component (11) of the suction tube (4), has on the outside an essentially circular cross section and an axially extending toothing (12) in which the depth limit stop (5), arranged outside it coaxially, is displaceable axially by at least discrete increments and can be locked by turning.

6. Dust extractor according to one of the preceding claims, **characterised in that**, between the inner component (11) and the outer component (13) of the suction tube (4), there is arranged a setting means (14) which is movable axially to a limited extent and can be displaced axially by at least discrete increments with respect to the inner component (11) and can be locked to the axially extending toothing (12) by turning.

7. Dust extractor according to claim 6, **characterised in that**, on the outer component (13), at the axial transition to the inner component (11) of the suction tube (4), there is arranged an axially fast setting ring (16) which is circumferentially displaceable to a limited extent and which is constructed to embrace the rotatably lockable setting means (14) circumferentially bilaterally with positive engagement.

## Revendications

1. Dispositif d'aspiration de poussière pour un outil à main au moins partiellement tournant (2), comprenant un tube d'aspiration (4) qui est guidé parallèlement à l'axe d'outil (A), déporté radialement, relié à une tête d'aspiration d'extrémité (3), fixe en rotation, mobile axialement de façon limitée de manière télescopique et qui comporte une butée de profondeur axiale réglable (5), **caractérisé en ce que** le tube d'aspiration (4) renferme coaxialement un soufflet plissé (6).

2. Dispositif d'aspiration de poussière selon la revendication 1, **caractérisé en ce que** le tube d'aspiration (4) est conçu avec une précontrainte élastique axiale.

3. Dispositif d'aspiration de poussière selon la revendication 1 ou la revendication 2, **caractérisé en ce que** le soufflet plissé (6) est assisté par un ressort.

4. Dispositif d'aspiration de poussière selon une des revendications précédentes, **caractérisé en ce que** la tête d'aspiration (3) est pourvue de soies (9) orientées radialement vers l'intérieur.

5. Dispositif d'aspiration de poussière selon une des revendications précédentes, **caractérisé en ce que** la partie intérieure (11) du tube d'aspiration (4) mobile axialement de façon limitée de manière télescopique présente extérieurement une section transversale sensiblement circulaire et une denture extérieure (12), dans laquelle la butée de profondeur (5) disposée coaxialement à l'extérieur peut se déplacer axialement et s'encliqueter en rotation de manière au moins discontinue.

6. Dispositif d'aspiration de poussière selon une des revendications précédentes, **caractérisé en ce qu'**entre la partie intérieure (11) et la partie extérieure (13) du tube d'aspiration (4) est disposé un verrou de positionnement (14) à mobilité axiale limitée, déplaçable axialement au moins de manière discontinue par rapport à la partie intérieure (11) et encliquetable en rotation dans la denture extérieure (12).

7. Dispositif d'aspiration de poussière selon la revendication 6, **caractérisé en ce que** sur la partie extérieure (13), au niveau de la transition axiale avec la partie intérieure (11) du tube d'aspiration (4), est disposé un anneau de positionnement (16) qui est fixe axialement et à mobilité circonférentielle limitée et qui est conçu pour entourer en périphérie le verrou de positionnement encliquetable en rotation (14) par complémentarité de formes des deux côtés.
